Europäisches Patentamt

European Patent Office

Office européen des brevets

(11) Veröffentlichungsnummer: **0 282 813**

**A1**

(12) **EUROPÄISCHE PATENTANMELDUNG**

(21) Anmeldenummer: 88103125.6

(22) Anmeldetag: 02.03.88

(51) Int. Cl.4: **A01C 7/10**

(30) Priorität: 13.03.87 DE 3708205

(43) Veröffentlichungstag der Anmeldung:
21.09.88 Patentblatt 88/38

(84) Benannte Vertragsstaaten:
DE FR NL

(71) Anmelder: **Amazonen-Werke H. Dreyer GmbH
& Co. KG
Am Amazonenwerk 9-13
D-4507 Hasbergen-Gaste(DE)**

(72) Erfinder: **Scheufler, Bernd, Dr.
Am Amazonenwerk 101
D-4507 Hasbergen(DE)**

(54) **Einzelkornsämaschine.**

(57) Einzelkornsämaschine mit umlaufenden Verteilerelementen, die pro Umdrehung eine bestimmte Anzahl Saatkörner ausbringen, wobei den Verteilerelementen zumindest ein Sensor zugeordnet ist, der die Umdrehungen der Verteilerelemente zählt, wobei der Sensor in einem Regelkreis angeordnet ist, dessen Führungsgröße die Fahrgeschwindigkeit oder die pro Zeiteinheit zurückgelegte Wegstrecke der Einzelkornsämaschine ist. Um die Überwachung der Anzahl der tatsächlich ausgebrachten Saatkörner bei einer Einzelkornsämaschine, wobei der Antrieb der Verteilerelemente in Abhängigkeit von der Fahrgeschwindigkeit regelbar ist in einfacher und exakter Weise auszugestalten ist vorgesehen, daß zusätzlich ein Saatkornsensor (25) zumindest einem Verteilerelement (14) zugeordnet ist, welcher die tatsächlich ausgebrachten Saatkörner (23) selbst in Abhängigkeit der Fahrgeschwindigkeit oder in Abhängigkeit der von dem ersten Sensor (27) ermittelten Umdrehungen des Verteilerelementes (14) zählt, daß die aufgrund der Umdrehungen der Verteilerelemente (14) von dem ersten Sensor (27) ermittelte theoretisch ausgebrachte Sollzahl von Saatkörnern in einer Verteilerschaltung mit der von dem Saatkornsensor (25) ermittelten tatsächlich ausgebrachten Saatkörner (23) verglichen wird, und daß beim Überschreiten einer festgelegten Toleranz der Abweichung vom Sollwert zum Istwert ein Warnsignal erzeugt wird.

FIG. 2

## Einzelkornsämaschine

Die Erfindung betrifft eine Einzelkornsämaschine mit umlaufenden Verteilerelementen gemäß des Oberbegriffes des Anspruches 1.

Eine derartige Einzelkornsämaschine ist bereits durch die Patentanmeldung P 37 04 308.0 bekannt. Diese Einzelkornsämaschine besteht aus einzelnen, nebeneinander angeordneten Einzelkornsägeräten, die jeweils einen Vorratsbehälter aufweisen. Die Einzelkornsägeräte sind jeweils mit rotierend angetriebenen Verteilorganen ausgestattet, die pro Umdrehung eine genau definierte Anzahl von Saatkörnern ausbringen. Der Antrieb der Vereinzelungsorgane erfolgt entweder von der von einem einstellbaren Hydraulikmotor angetriebenen zentralen Antriebswelle, oder von den einstellbaren Hydraulikmotoren, die jedem Vereinzelungsorgan zugeordnet sind. Über ein in einem an den Hydraulikmotor angeflanschten Steuerblock angeordnetes Hydraulikmengenventil läßt sich die Drehzahl des Hydraulikmotors über dem ihm zugeführten Volumenstrom genau einstellen und verändern. Der Steuerblock ist mit einem elektronischen Dosiergerät verbunden, daß auf dem die Einzelkornsämaschine transportierenden Ackerschlepper angebracht ist. Ein an einem Vereinzelungsorgan oder an einer Antriebseinrichtung angeordneter Sensor erfaßt die jeweilige Drehzahl, die proportional der momentanen Anzahl der ausgesäten Saatkörner ist, und übermittelt diese Informationen an das elektronische Dosiergerät.

Dieses Dosiergerät ist ebenfalls mit einem Geschwindigkeitssensor verbunden, der zur Ermittlung der momentanen Fahrgeschwindigkeit dient. Der Antrieb der Vereinzelungsorgane wird in Abhängigkeit der ermittelten Fahrgeschwindigkeit vom Dosiergerät automatisch geregelt. Aus den dem Dosiergerät übermittelten verschiedenen Informationen ermittelt der Mikroprozessor des elektronischen Dosiergerätes die momentane Anzahl der pro Flächeneinheit ausgesäten Saatkörner. Die Anzahl der momentan ausgebrachten Saatkörner pro Flächeneinheit wird mit der zu beginn der Säarbeit festgelegten und in das Dosiergerät eingegebenen, gewünschten Anzahl der pro Flächeneinheit auszusäenden Saatkörner verglichen. Ein Nichteinhalten der gewünschten Aussaatmenge führt sofort zu einer entsprechenden Verstellung am Hydraulikmotor, so daß stets die pro Flächeneinheit gewünschte Anzahl der Saatkörner eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

Die Ermittlung der tatsächlich ausgebrachten Saatkörner erfolgt über das Zählen der Umdrehungen der Vereinzelungsorgane, die bedingt durch ihre Konstruktion zur Vereinzelung des Saatgutes pro Umdrehung eine bestimmte Anzahl Saatkörner aufnehmen und abgeben. Diese Art der Ermittlung der Anzahl der tatsächlich ausgebrachten Saatkörner setzt voraus, daß pro Umdrehung der Vereinzelungsorgane immer genau die konstruktionsbedingte Anzahl von Saatkörnern, beispielsweise 30 Saatkörner, exakt aufgenommen und wieder abgegeben wird. Werden nun aus irgendeinem Grunde beispielsweise nur 27 Saatkörner von dem Vereinzelungs organ aufgenommen bzw. wieder abgegeben, wird dies nicht berücksichtigt und führt zum nicht ordnungsgemäßen Ausbringen der pro Flächeneinheit auszubringenden Anzahl von Saatkörnern. Es wird also nur ein exaktes Aussäen der pro Flächeneinheit gewünschten Aussaatmenge vorgetäuscht, in Wirklichkeit kommt es zu einer Abweichung zwischen der Anzahl der tatsächlich ausgebrachten Saatkörner und dem Sollwert der auszubringenden Saatkörner.

Der Erfindung liegt daher die Aufgabe zugrunde, die Überwachung der Anzahl der tatsächlich ausgebrachten Saatkörner bei einer Einzelkornsämaschine, wobei der Antrieb der Verteilerelemente in Abhängigkeit von der Fahrgeschwindigkeit regelbar ist, in einfacher und exakter Weise auszugestalten.

Diese Aufgabe wird in erfindungsgemäßer Weise dadurch gelöst, daß zusätzlich ein Saatkornsensor zumindest einem Verteilerelement zugeordnet ist, welcher die tatsächlich ausgebrachten Saatkörner selbst in Abhängigkeit der Fahrgeschwindigkeit oder in Abhängigkeit der von dem ersten Sensor ermittelten Umdrehungen des Verteilerelementes zählt, daß die aufgrund der Umdrehungen der Verteilerelemente von dem ersten Sensor ermittelte theoretisch ausgebrachte Sollzahl von Saatkörnern in einer Verteilerschaltung mit der von dem Saatkornsensor ermittelten tatsächlich ausgebrachten Saatkörner verglichen wird, und daß beim Überschreiten einer festgelegten Toleranz der Abweichung vom Sollwert zum Istwert ein Warnsignal erzeugt wird.

Infolge dieser Maßnahme läßt sich das Ausbringen der Saatkörner bei einer Einzelkornsämaschine, mit von einem regelbaren Antrieb in Abhängigkeit der Fahrgeschwindigkeit angetriebenen Verteilerelementen, in einfacher und exakter Weise durchführen. Gleichzeitig dient diese Anordnung als Funktionsüberwachung der Verteilerelemente, wobei der Schlepperfahrer beim Überschreiten einer festgelegten Toleranz der Abweichung vom Sollwert der auszubringenden Saatkörner zur tatsächlichen Anzahl der pro Flächeneinheit ausgesäten Saatkörner sofort über das Warnsignal in Kenntnis gesetzt wird und die Ursache für die Abweichung ausfindig machen und beheben kann, so daß dann wieder das ordnungsgemäße Ausbringen der Saatkörner sichergestellt ist. Hierbei ist vorgesehen, daß als Warnsignal ein akustisches und/oder optisches Signal erzeugt wird, das immer vom Schlepperfahrer wahrgenommen wird.

Bei der Ausbildung des Saatkornsensors ist erfindungsgemäß vorgesehen, daß dieser als Lichtschranke ausgebildet ist.

In einer besonders bevorzugten Ausführungsform ist in erfindungsgemäßer Weise vorgesehen, daß bei mehreren nebeneinander angeordneten Einzelkornsägeräten einer Sämaschine, wobei die Verteilerelemente der einzelnen Sägeräte von einem zentralen Antriebsmechanismus angetrieben werden, zumindest ein Sensor vorgesehen ist, der bei der Umdrehung der Verteilerelemente zumindest eines Einzelkornsägerätes entsprechende Signale erzeugt, und daß für jedes Einzelkornsägerät zumindest ein Saatkornsensor, der die tatsächlich ausgebrachten Saatkörner zählt, vorgesehen ist, und daß die Verteilerschaltung für jedes Einzelkornsägerät eine optische Signaleinrichtung aufweist. Hierdurch ist auf jeden Fall sichergestellt, daß die Anzahl der pro Flächeneinheit auszusäenden Saatkörner, also der Sollwert über die gesamte Breite der Einzelkornsämaschine exakt eingehalten wird, wobei das bzw. die eine Abweichung vom Sollwert der auszusäenden Saatkörner aufweisenden Einzelkornsägeräte auf einfachste Weise sofort identifiziert werden können, deren Ursache für die Abweichung dann behoben wird.

Weitere Einzelheiten der Erfindung sind der Beispielsbeschreibung und den Zeichnungen zu entnehmen.
Hierbei zeigen

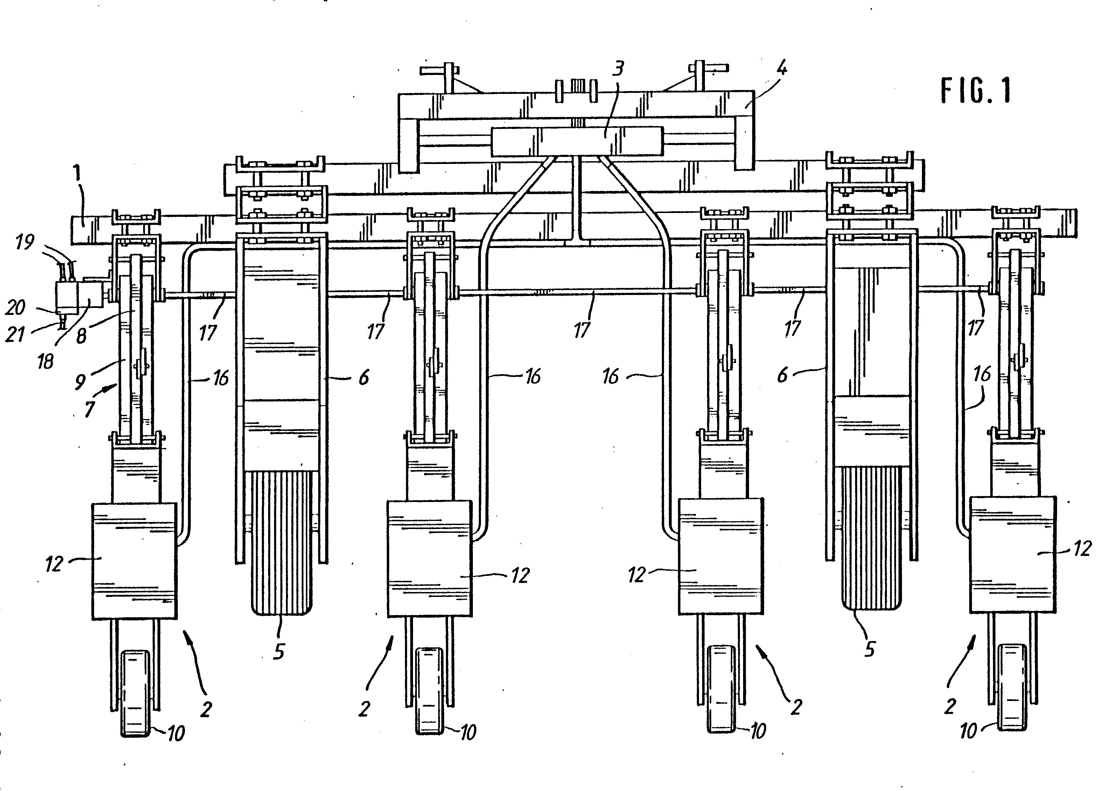

Fig. 1 die in erfindungsgemäßer Weise ausgebildete Einzelkornsämaschine in Prinzipdarstellung in der Draufsicht und

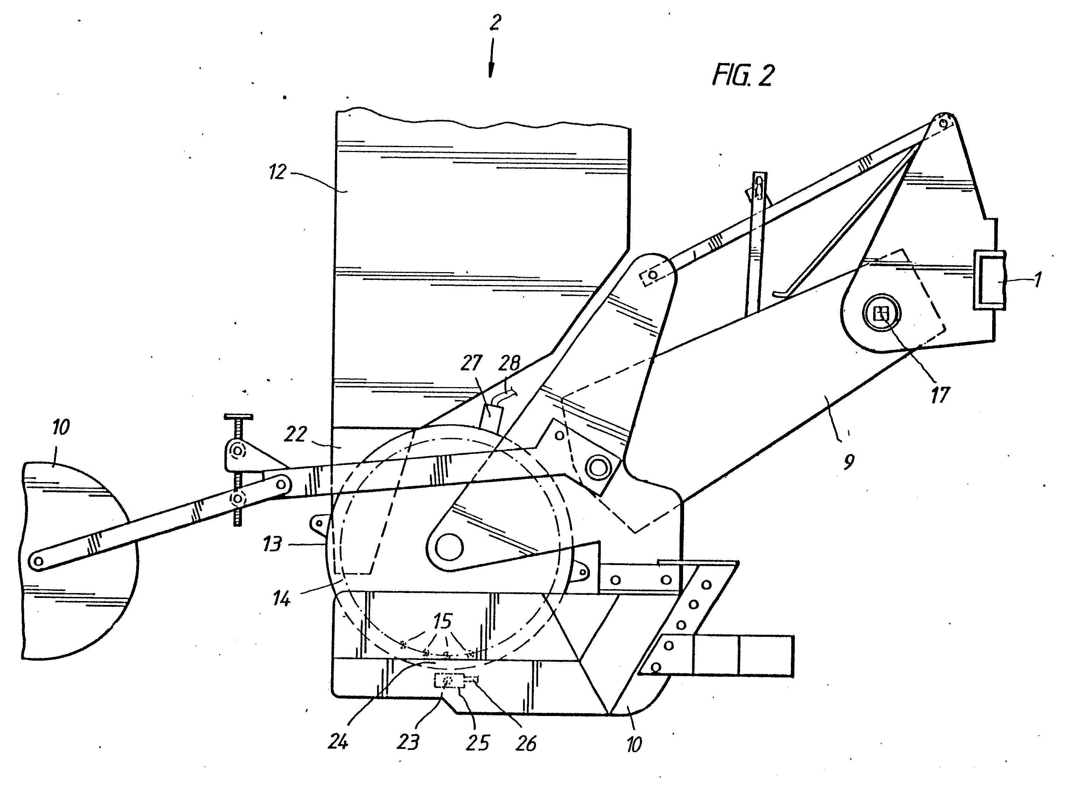

Fig. 2 die Seitenansicht des Einzelkornsägerätes der Einzelkornsämaschine.

Die Einzelkornsämaschine weist den Tragrahmen 1 auf, an dem die einzelnen Einzelkornsägeräte 2, das Saugluftgebläse 3 sowie der Dreipunktanbaubock 4 zum Anbau an einen Schlepperkraftheber sowie die Laufräder 5, angeordnet sind. Während des Betriebes stützt sich die Einzelkornsämaschine über die Laufräder 5 auf dem Boden ab.

Die Laufräder 5 sind in den Tragarmen 6 jeweils drehbar gelagert. Diese Tragarme 6 sind jeweils zwischen zwei Einzelkornsägeräte 2 an dem Tragrahmen 1 mit Schrauben festgeklemmt. Die Einzelkornsägeräte 2 sind mit der parallelogrammartigen Halterung 7 jeweils an dem Tragrahmen 1 in aufrechter Ebene bewegbar angelenkt. Die parallelogrammartige Halterung 7 weist jeweils den Oberlenker 8 und den Unterlenker 9 auf. Hinter den Einzelkornsägeräten 2 ist jeweils die höheneinstellbare Tiefenführungs - und Druckrolle 10 angeordnet, mit der die Eindringtiefe der Säschare 11 der Einzelkorngeräte 2 in den Boden bestimmt wird.

Die Einzelkornsägeräte 2 weisen den Vorratsbehälter 12 auf, von dem aus das sich in dem Vorratsbehälter 12 befindliche Saatgut zu dem jeweils in dem Gehäuse 13 angeordneten Vereinzelungsorgan 14 des jeweiligen Einzelkornsägerätes 2 gelangt. Die Vereinzelung des Saatgutes durch das Vereinzelungsorgan 14 erfolgt in bekannter Weise mittels der in den Vereinzelungsorganen 14 angeordneten Löcher 15. Jedes Vereinzelungsorgan 14 wird von dem Saugluftgebläse 3 über die Schlauchleitung 16 mit Saugluft beaufschlagt und weist beispielsweise 30 Löcher 15 auf. Der Antrieb der jeweils unterhalb des Vorratsbehälter 12 angeordneten Vereinzelungsorgane 14 erfolgt von der zentralen Antriebswelle 17 über eine in dem Unterlenker 9 angeordnete Antriebsvorrichtung. Der Antrieb der zentralen Antriebswelle 17 erfolgt über den Hydraulikmotor 18, der an die Antriebswelle 17 angeflanscht ist. Über die Hydraulikschläuche 19 läßt sich der Hydraulikmotor 18 mit dem Hydrauliksystem des die Einzelkorndrillmaschine transportierenden Ackerschleppers verbinden, so daß eine Beaufschlagung des Hydraulikmotors 18 mit Hydrauliköl zum Antrieb der Vereinzelungsorgane 14 der Einzelkornsägeräte 2 führt. Der Hydraulikmotor 18 weist den angeflanschten Steuerblock 20 auf, in dem ein über einen Elektromotor zu verstellendes Hydraulikmengenventil angeordnet ist. Die Ansteuerung des Steuerblockes 20 erfolgt über das Kabel 21, das mit dem Mikroprozessor eines auf dem Ackerschlepper angeordneten elektronischen Dosiergerätes verbunden ist.

Die angetriebenen Vereinzelungsorgane 14 entnehmen jeweils dem unteren Bereich 22 des Vorratsbehälters 12 das Saatgut, wobei nach einem bekannten, nicht dargestellten Vereinzelungsvorgang nur jeweils ein Saatkorn 23 an einem Loch 15 des Vereinzelungsorganes 14 haftet. Im unteren Bereich 24 des Vereinzelungsorganes 14 passieren die Saatkörner 23 einen Abwerfer, der jeweils immer nur ein Saatkorn 23 von dem Vereinzelungsorgan abstreift. Das jeweils von dem Vereinzelungsorgan 14 abgestreifte Saatkorn 23 passiert den im Säschar 10 angeordneten Saatkornsensor 25, bevor es in den Boden abgelegt wird und erzeugt so einen Impuls pro Saatkorn, der über das Kabel 26 an das elektronische Dosiergerät weitergeleitet wird. Der Sensor 25 dient somit zum Zählen der tatsächlich ausgebrachten Saatkörner.

Mittels des mit dem Vereinzelungsorgan 14 zusammenwirkenden Sensors 27 werden die Umdrehungen des Organs 14 erfaßt und über das Kabel 28 an das Dosiergerät übermittelt. Dieses Dosiergerät ist ebenfalls mit einem bekannten und nicht näher dargestellten Geschwindigkeitssensor verbunden, der zur Ermittlung der momentanen Fahrgeschwindigkeit dient. Diese, dem Dosiergerät zugeführten Informationen verarbeitet der Mikroprozessor des Dosiergerätes so daß die Anzahl der pro Flächeneinheit ausgebrachten Saatkörner unter Berücksichtigung der jeweiligen Fahrgeschwindigkeit, mit der die Einzelkornsämaschine über das Feld gezogen wird, angezeigt wird. Durch Veränderung der Drehzahl der zentralen Antriebswelle 17 über den Hydraulikmotor 18 läßt sich der Ablegeabstand der einzelnen Saatkörner zueinander stufenlos variieren, so daß ein Verändern der pro Flächeneinheit ausgebrachten Saatkörner in einfacher Weise möglich ist.

Das Einstellen der pro Flächeneinheit auszusäenden Saatkörner erfolgt mittels des elektronischen Dosiergerätes unter Berücksichtigung der momentanen Fahrgeschwindigkeit. Zu Beginn der Säarbeit braucht der Landwirt nur die von ihm gewünschte Anzahl der pro Flächeneinheit auszusäenden Saatkörner, unter Berücksichtigung der Reihenweite von beispielsweise 90.000 Saatkörner, pro Hektar, über die entsprechenden Tasten des Dosiergerätes in den Mikroprozessor einzugeben, und es erfolgt automatisch eine entsprechende Einstellung des Hydraulikmotors 18 mittels der Steuerung 20 während des Sävorganges. Dieser eingestellte Wert wird während des Sävorganges ständig überwacht und ein Nichteinhalten der gewünschten Aussaatmenge führt sofort zu einer entsprechenden Verstellung des Hydraulikmotors 18, so daß stets die pro Flächeneinheit gewünschte Anzahl der Saatkörner eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

Die Überwachung des vorgegebenen Ausbringmengenwertes läßt sich folgendermaßen beschreiben:

Wird die Einzelkornsämaschine nun mit einer bestimmten Fahrgeschwindigkeit über das Feld gezogen, erfolgt eine automatische Einstellung des Hydraulikmotors 18 über die Steuerung 20 mittes des Dosiergerätes, so daß die zentrale Antriebswelle 17 die Vereinzelungsorgane 14 mit einer der gewünschten Ausbringmenge entsprechenden Drehzahl unter Berücksichtigung der momentanen Fahrgeschwindigkeit antreibt.

Um jetzt während des Sävorganges zu kontrollieren, ob die Anzahl der tatsächlich ausgebrachten Saatkörner pro Flächeneinheit mit dem vorgegebenen Sollwert, unter Berücksichtigung der jeweiligen Fahrgeschwindigkeit, übereinstimmt, werden die von den Sensoren 25 und 27 gelieferten Informationen miteinander verknüpft. Der Sensor 27, der mit dem Vereinzelungsorgan 14 zusammenwirkt, zählt die Umdrehungen des Vereinzelungsorgans 14 und ermittelt so die theoretisch auszubringede Sollzahl von Saatkörnern. Der Sensor 25 zählt die tatsächlich ausgebrachten Saatkörner 23 und liefert den Istwert. Während des Sävorganges wird die Sollzahl ständig mit der Istzahl verglichen, wobei beim Überschreiten einer festgelegten Toleranz der Abweichung vom Sollwert zum Istwert ein Warnsignal erzeugt wird, und der Schlepperfahrer so über diesen Mißstand in Kenntnis gesetzt wird.

## Ansprüche

1. Einzelkornsämaschine mit umlaufenden Verteilerelementen, die pro Umdrehung eine bestimmte Anzahl Saatkörner ausbringen, wobei den Verteilerelementen zumindest ein Sensor zugeordnet ist, der die Umdrehungen der Verteilerelemente zählt, wobei der Sensor in einem Regelkreis angeordnet ist, dessen Führungsgröße die Fahrgeschwindigkeit oder die pro Zeiteinheit zurückgelegte Wegstrecke der Einzelkornsämaschine ist, dadurch gekennzeichnet, daß zusätzlich ein Saatkornsensor (25) zumindest einem Verteilerelement (14) zugeordnet ist, welcher die tatsächlich ausgebrachten Saatkörner (23) selbst in Abhängigkeit der Fahrgeschwindigkeit oder in Abhängigkeit der von dem ersten Sensor (27) ermittelten Umdrehungen des Verteilerelementes (14) zählt, daß die aufgrund der Umdrehungen der Verteilerelemente (14) von dem ersten Sensor (27) ermittelte theoretisch ausgebrachte Sollzahl von Saatkörnern in einer Verteilerschaltung mit der von dem Saatkornsensor (25) ermittelten tatsächlich ausgebrachten Saatkörner (23) verglichen wird, und daß beim Überschreiten einer festgelegten Toleranz der Abweichung vom Sollwert zum Istwert ein Warnsignal erzeugt wird.

2. Einzelkorndrillmaschine nach Anspruch 1, dadurch gekennzeichnet, daß der Saatkornsensor (25) als Lichtschranke ausgebildet ist.

3. Einzelkorndrillmaschine nach Anspruch 1, dadurch gekennzeichnet, daß als Warnsignal ein akustisches und/oder optisches Signal erzeugt wird.

4. Einzelkorndrillmaschine nach Anspruch 1, dadurch gekennzeichnet, daß bei mehreren nebeneinander angeordneten Einzelkornsägeräten (2) einer Sämaschine, wobei die Verteilerelemente (14) der einzelnen Sägeräte (2) von einem zentralen Antriebsmechanismus (17) angetrieben werden, zumindest ein Sensor (27) vorgesehen ist, der bei der Umdrehung der Verteilerelemente (14) zumindest eines Einzelkornsägerätes (2) entsprechende Signale erzeugt, und daß für jedes Einzelkornsägerät (2) zumindest ein Saatkornsensor (25), der die tatsächlich ausgebrachten Saatkörner zählt, vorgesehen ist, und daß die Verteilerschaltung für jedes Einzelkornsägerät (2) eine optische Signaleinrichtung aufweist.

FIG.1

FIG. 2

AMAZONEN-WERKE  H.DREYER  GmbH & Co.KG

# EUROPÄISCHER RECHERCHENBERICHT

Europäisches Patentamt

Nummer der Anmeldung

EP 88 10 3125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 132 395 (FEDMECH) <br> * Figur 1; Ansprüche 1-6,8-13 * | 1-3 | A 01 C 7/10 |
| Y | | 4 | |
| Y | DE-A-3 001 926 (BOURNE) <br> * Figuren 1,3; Seite 12, Zeile 8 - Seite 13, Zeile 30 * | 4 | |
| A | DE-A-3 502 011 (AMAZONEN-WERKE) <br> * Figur 1; Seite 7, Zeile 7 - Seite 10, Zeile 25 * | 1-4 | |
| A | FR-A-2 414 861 (PATENT CONCERN) <br> * Figuren 1,2; Seite 3, Zeile 13 - Seite 4, Zeile 20 * | 1-4 | |

RECHERCHIERTE SACHGEBIETE (Int. Cl.4)

A 01 C

Der vorliegende Recherchenbericht wurde für alle Patentansprüche erstellt

| Recherchenort | Abschlußdatum der Recherche | Prüfer |
|---|---|---|
| DEN HAAG | 10-06-1988 | MEINDERS H. |

EPO FORM 1503 03.82 (P0403)